# EUROPÄISCHE PATENTSCHRIFT

(11) **EP 1 242 747 B1**
(45) Veröffentlichungstag und Bekanntmachung des Hinweises auf die Patenterteilung: **09.05.2007**
(21) Anmeldenummer: 00964003.8
(22) Anmeldetag: 08.08.2000
(51) Int. Cl.: F15B 21/04, B01D 29/15, B01D 29/58, B01D 29/23, B01D 35/147

(54) **FILTERVORRICHTUNG EINES HYDRAULIKSYSTEMS**
FILTER DEVICE OF A HYDRAULIC SYSTEMS
DISPOSITIF DE FILTRATION D'UN SYSTEME HYDRAULIQUE

(30) Priorität: 20.11.1999 DE 19955635
(43) Veröffentlichungstag der Anmeldung: 25.09.2002
(73) Patentinhaber: FSP Fluid Systems Partners Holding AG, 6340 Baar (CH)
(72) Erfinder: REINHARDT, Hans, 75015 Bretten (DE)
(74) Vertreter: Karrais, Martin
(86) Internationale Anmeldenummer: PCT/EP2000/007654
(87) Internationale Veröffentlichungsnummer: WO 2001/038744

(56) Entgegenhaltungen:
- DE-A- 4 011 913
- DE-A- 4 404 760
- MAGER M: "FILTRATION IN HYDRAULISCHEN SYSTEMEN" OLHYDRAULIK UND PNEUMATIK,DE,KRAUSSKOPF VERLAG FUR WIRTSCHAFT GMBH. MAINZ, Bd. KONSTR.JAHRBUCH, 1998, Seiten 18-22,24,26,28,30,32-33, XP000831894 ISSN: 0341-2660
- "KOMBINATIONSFILTERELEMENTE FUR VERBESSERTE FILTRATION VON HYDRAULIKFLUSSIGKEITEN" OLHYDRAULIK UND PNEUMATIK,DE,KRAUSSKOPF VERLAG FUR WIRTSCHAFT GMBH. MAINZ, Bd. 37, Nr. 8, 1. August 1993 (1993-08-01), Seiten 652-653, XP000413164 ISSN: 0341-2660
- "HYDRAULIC FILTRATION" HYDRAULICS AND PNEUMATICS,US,INDUSTRIAL PUBLISHING CORP. CLEVELAND, Bd. 31, Nr. 3, 1. März 1978 (1978-03-01), Seiten 10-21, XP002007022 ISSN: 0018-814X

## Beschreibung

Die Erfindung betrifft eine Filtervorrichtung zum Filtrieren einer Hydraulikflüssigkeit mit einem Filtergehäuse, in dem ein Filterelement angeordnet ist.

Die Erfindung betrifft außerdem ein Filterelement für eine derartige Filtervorrichtung sowie eine hydraulische Schaltung mit einer Filtervorrichtung.

Filtervorrichtungen der eingangs genannten Art kommen in einer Vielzahl von Anwendungen zum Einsatz, beispielsweise bei selbstfahrenden Maschinen, wie zum Beispiel Baumaschinen oder Landmaschinen. Hierbei müssen die Hydrauliksysteme sehr hohen Anforderungen an die Sauberkeit der Hydraulikflüssigkeit genügen, um über lange Betriebszeiten störungsfrei und mit geringem Verschleiß ihre Funktion erfüllen zu können. Bei vielen Hydrauliksystemen besteht bereits bei der Erstinbetriebnahme aufgrund von im Vorratstank der Hydraulikflüssigkeit verbliebenen Schmutzrückständen ein hohes Schadensrisiko für die zum Einsatz kommenden Hydraulikpumpen. Vor allem bei komplex geformten Vorratsbehältern, die als GuBteil oder Schweißkonstruktion gestaltet sind, ist eine zuverlässige, gründliche Reinigung mit vertretbarem Aufwand kaum möglich. Üblicherweise wird deshalb den Hydraulikpumpen zumindest ein Schutzfilter vorgeschaltet, das Schmutzpartikel von einer Mindestgröße von ca. 60 µm zurückhält.

Derartige Schutzfilter sind jedoch meistens nicht ausreichend, um die erforderliche Verschleißdauer hochbelasteter Hydraulikkomponenten zu gewährleisten. Hierzu müssen in vielen Fällen wesentlich kleinere Schmutzpartikel wirkungsvoll aus der Hydraulikflüssigkeit ausgefiltert werden. Zu diesem Zweck kann zusätzlich zu dem genannten Schutzfilter ein separates Feinfilter mit einer Feinheit kleiner 15 µm verwendet werden, mit dem also Schmutzpartikel von einer Mindestgröße von etwa 15 µm entfernt werden können. Das Schutzfilter kommt hierbei in Form eines Saugfilters zum Einsatz, welches in die Ansaugleitung der Hydraulikpumpe geschaltet ist, und das Feinfilter wird in der Rücklaufleitung oder Druckleitung des Hydrauliksystems eingebaut. Als Saugfilter werden hierbei meist Siebelemente eingesetzt, während in den Druck- oder Rücklauffiltern Filterelemente mit Filtermaterial aus Faservlies zum Einsatz kommen können, die in vielen Fällen selbst Schmutzpartikel in der Größe von ca. 5 µm noch mit einem Wirkungsgrad von mindestens 50 % aus der Hydraulikflüssigkeit ausfiltern. Der Einsatz zweier separater Filter mit unterschiedlicher Filterfeinheit ermöglicht zwar eine lange Lebensdauer des Hydrauliksystems, er ist aber mit erheblichen Kosten sowohl in der Erstausrüstung als auch bei der Wartung verbunden. Aus der DE-A-44 04 760 ist ein Filterelement mit axial hintereinander angeordneten Teilelementen mit unterschiedlicher Filterfeinheit bekannt. Dies ermöglicht es, gleichzeitig eine Grobfilterung und eine Feinfilterung vorzunehmen.

Alternativ kann auch vorgesehen sein, nur ein einziges Filter mit einer Feinheit von mindestens ca. 20 µm zu verwenden, so daß mittels des einzigen zum Einsatz kommenden Filters Schmutzpartikel in der Größe von mindestens 20 µm noch mit einem Wirkungsgrad von 99 % aus der Hydraulikflüssigkeit ausgefiltert werden. Dies ermöglicht nicht nur einen zuverlässigen Schutz der Hydraulikpumpen, sondern auch die weiteren Hydraulikkomponenten werden vor Verunreinigungen geschützt. Da das Filter jedoch der Pumpe vorgeschaltet und somit als Saugfilter ausgebildet sein muß, ist für das Filter ein großes Bauvolumen erforderlich, damit trotz der vorliegenden Filter-Feinheit relativ geringe zulässige Druckverlust auf der Saugseite der Hydraulikpumpe nicht überschritten wird. Dieser Nachteil ist besonders dann von Bedeutung, wenn als Hydraulikflüssigkeit ein zähflüssiges Öl eingesetzt werden muß oder wenn bei der Inbetriebnahme des Hydrauliksystems tiefe Temperaturen und somit hohe Viskositäten für die Hydraulikflüssigkeit zu erwarten sind.

Aufgabe der vorliegenden Erfindung ist es, eine Filtervorrichtung der eingangs genannten Art derart weiterzubilden, daß es einen zuverlässigen Schutz sowohl einer Hydraulikpumpe als auch sonstiger hochbelastbarer Hydraulikkomponenten gewährleistet und eine kompakte, wartungsfreundliche Bauform aufweist.

Diese Aufgabe wird bei einer Filtervorrichtung der gattungsgemäßen Art erfindungsgemäß dadurch gelöst, daß das Filterelement ein erstes und ein zweites Teilelement umfaßt, wobei das erste Teilelement eine höhere Filter-Feinheit als das zweite Teilelement aufweist und beide Teilelemente durch eine gemeinsame Einführöffnung in das Filtergehäuse einsetzbar sind, und daß jedem Teilelement über einen separaten Zulauf im Filtergehäuse Hydraulikflüssigkeit zuführbar ist und von beiden Teilelementen über einen gemeinsamen Ablauf im Filtergehäuse filtrierte Hydraulikflüssigkeit abführbar ist.

Erfindungsgemäß ist für die Filtervorrichtung ein Kombinations-Filterelement vorgesehen, das in das Filtergehäuse eingesetzt werden kann und das zwei Teilelemente mit unterschiedlicher Feinheit aufweist. Das Filtergehäuse weist mindestens zwei Zugangsöffnungen auf, so daß den beiden Teilelementen unterschiedliche Hydraulikflüssigkeitsströme zugeführt werden können. Die filtrierte Hydraulikflüssigkeit kann dann über eine dritte Öffnung im Filtergehäuse abgeführt werden. Eine derartige Ausgestaltung der Filtervorrichtung ermöglicht es, eines der beiden Teilelemente des Filterelements einer Hydraulikpumpe vorzuschalten, während das andere Teilelement sonstigen Hydraulikkomponenten nachgeordnet werden kann. Das der Hydraulikpumpe vorgeschaltete Teilelement kann hierbei eine gröbere Feinheit aufweisen als das andere Teilelement, so daß der Druckverlust auf der Saugseite der Hydraulikpumpe gering gehalten werden kann, während gleichzeitig mittels des anderen Teilelements selbst sehr kleine Schmutzpartikel aus der Hydraulikflüssigkeit ausgefiltert werden können, indem das Teilelement in die Rücklaufleitung des Hydrauliksystems geschaltet wird. Hierzu sind am Filtergehäuse separate Zugangsöffnungen für die beiden Teilelemente vorgesehen.

Da die beiden Teilelemente über eine gemeinsame Einführöffnung in das Filtergehäuse eingesetzt werden können, zeichnet sich die Filtervorrichtung außerdem durch eine hohe Wartungsfreundlichkeit aus, denn es ist nicht erforderlich, die Filtervorrichtung vollständig zu zerlegen, um die beiden Teilelemente auswechseln zu können.

Vorzugsweise sind die beiden Zuläufe mittels mindestens eines Dichtungselements fluiddicht voneinander getrennt. Eine derartige Ausgestaltung gibt die Möglichkeit, die beiden Teilelemente in einen gemeinsamen Aufnahmeraum des Filtergehäuses einzusetzen, in den die beiden Zuläufe einmünden, wobei dann durch mindestens ein Dichtungselement sichergestellt wird, daß der Zulauf für das erste Teilelement fluiddicht vom Zulauf für das zweite Teilelement getrennt ist. Als Dichtungselemente können beispielsweise O-Ringdichtungen zum Einsatz kommen. Die Dichtungselemente sind vorzugsweise an den Teilelementen gehalten und können gemeinsam mit dem Filterelement in das Filtergehäuse eingesetzt werden.

Bei einer bevorzugten Ausführungsform ist vorgesehen, daß zumindest dem ersten Teilelement eine Umgehungsleitung mit einem Bypassventil zugeordnet ist. Das erste Teilelement zeichnet sich durch eine höhere Feinheit aus, so daß insbesondere für dieses Teilelement die Gefahr besteht, daß es sich während seines Einsatzes allmählich zusetzt. Dies hat einen zunehmenden Druckverlust zur Folge. Um einen unzulässigen Druckanstieg am ersten Teilelement zu vermeiden, ist das Bypassventil in Form eines Druckbegrenzungsventils vorgesehen, das die Umgehungsleitung freigibt, sofern auf der Anströmseite des ersten Teilelements ein Druckanstieg über festgelegte Normalwerte hinaus erfolgt. Eine Beschädigung des ersten Teilelements wird dadurch vermieden.

Von Vorteil ist es, wenn die Umgehungsleitung den Zulauf des ersten Teilelements mit dem Zulauf des zweiten Teilelements verbindet. Eine derartige Ausgestaltung hat den Vorteil, daß im Falle eines unzulässigen Druckanstiegs am ersten Teilelement dieses zwar überbrückt wird, dann jedoch die Hydraulikflüssigkeit über das zweite Teilelement weiterhin filtriert wird, so daß selbst bei zugesetztem ersten Teilelement über das zweite Teilelement weiterhin zumindest gröbere Schmutzpartikel aus der Hydraulikflüssigkeit ausgefiltert werden können.

Alternativ kann vorgesehen sein, daß die Umgehungsleitung den Zulauf des ersten Teilelements mit dem gemeinsamen Ablauf des ersten und zweiten Teilelements verbindet. Hierbei ist es von Vorteil, wenn in die Umgehungsleitung ein Siebelement geschaltet ist.

Vorzugsweise ist zum Verschließen der Einführöffnung ein lösbar verbindbarer Deckel vorgesehen. Hierbei ist es besonders günstig, wenn das Filtergehäuse einen Filtertopf aufweist zur Aufnahme des Filterelements, der mittels des Deckels fluiddicht verschließbar ist. Vorzugsweise ist in einer Bodenwand des Filtertopfes eine Durchgangsöffnung angeordnet, die einen Zulauf für eines der beiden Teilelemente oder den gemeinsamen Ablauf für beide Teilelemente ausbildet.

Bei einer besonders kompakten Ausgestaltung der erfindungsgemäßen Filtervorrichtung ist vorgesehen, daß der Filtertopf zwei seitliche Durchgangsöffnungen aufweist. So kann beispielsweise vorgesehen sein, daß der Filtertopf zylinderförmig ausgestaltet ist, wobei am Zylindermantel zwei Durchgangsöffnungen ausgebildet sind, die beispielsweise einen Zulauf für das erste Teilelement sowie den gemeinsamen Ablauf ausbilden. Alternativ kann vorgesehen sein, daß die beiden Zuläufe für die Teilelemente auf unterschiedlichen Höhen im Zylindermantel angeordnet sind, während der gemeinsame Ablauf in der Bodenwand des Zylinders angeordnet ist.

Der vorliegenden Erfindung liegt außerdem die Aufgabe zugrunde, ein Filterelement bereitzustellen, das in der voranstehend genannten Filtervorrichtung verwendet werden kann und eine hohe Filterstandzeit ermöglicht.

Diese Aufgabe wird erfindungsgemäß durch ein Filterelement mit den Merkmalen von Patentanspruch 9 gelöst. In Form eines Kombinations-Filterelements kann das erfindungsgemäße Filterelement gleichzeitig zum Schutz einer Hydraulikpumpe und zum Schutz hochbelasteter Hydraulikkomponenten zum Einsatz kommen. Die dadurch erzielbaren Vorteile wurden bereits im Zusammenhang mit der Erörterung der erfindungsgemäßen Filtervorrichtung dargelegt.

Erfindungsgemäß ist das zweite Teilelement in zwei Richtungen durchströmbar. Dies gibt die Möglichkeit, die Durchflußrichtung durch das zweite Teilelement zu ändern, so daß ein wirkungsvoller Rückspüleffekt erreicht wird, durch den sich die Filterstandzeit erheblich vergrößert. Das zweite Teilelement kann beispielsweise hohlzylinderförmig ausgestaltet sein, wobei das zum Einsatz kommende Filtermaterial den Zylindermantel ausbildet und sowohl auf seiner Außenseite als auch auf seiner Innenseite jeweils von einem Durchgangsöffnungen aufweisenden Stützrohr abgestützt ist.

Günstig ist es, wenn das erste Teilelement eine Feinheit kleiner etwa 20 µm aufweist, insbesondere eine Feinheit kleiner ca. 15 µm, so daß selbst Schmutzpartikel in der Größe von 15 µm mit einem Wirkungsgrad von mindestens 99 % aus der Hydraulikflüssigkeit ausgefiltert werden können.

Vorzugsweise umfaßt das erste Teilelement ein Filtermaterial mit einem Faservlies, da damit auf einfache Weise eine hohe Feinheit sichergestellt werden kann. So kann beispielsweise vorgesehen sein, daß mittels des Faservlieses selbst Schmutzpartikel in der Größe von ca. 5 µm noch mit einem Wirkungsgrad von mindestens 50 % ausgefiltert werden.

Um einen zuverlässigen Schutz einer Hydraulikpumpe zu gewährleisten, ist es günstig, wenn das zweite Teilelement eine Feinheit kleiner 60 µm aufweist. Hierzu kann das zweite Teilelement beispielsweise als Siebelement ausgebildet sein.

Bei einer besonders bevorzugten Ausgestaltung des erfindungsgemäßen Filterelements ist vorgesehen, daß die beiden Teilelemente lösbar miteinander verbindbar sind. Dies gibt die Möglichkeit, die beiden Teilelemente im verbundenen Zustand auf einfache Weise in das Filtergehäuse einzusetzen bzw. aus diesem heraus zu nehmen. Die beiden Teilelemente können voneinander gelöst werden, so daß sie unabhängig voneinander ausgetauscht werden können.

Eine besonders kostengünstig herstellbare Ausgestaltung zeichnet sich dadurch aus, daß die beiden Teilelemente unlösbar miteinander verbindbar sind. So kann beispielsweise vorgesehen sein, daß die beiden Teilelemente miteinander verklebt oder verschweißt sind.

Vorzugsweise ist das Filterelement im wesentlichen zylinderförmig ausgestaltet, wobei die beiden Teilelemente axial hintereinander angeordnet sind. Dies gibt die Möglichkeit, das Kombinations-Filterelement auf einfache Weise in einen zylinderförmigen Filtertopf eines Filtergehäuses einzusetzen.

Von Vorteil ist es, wenn das Filterelement einen vorzugsweise in Umfangsrichtung umlaufenden Dichtring umfaßt zum fluiddichten Trennen der Zuläufe der beiden Teilelemente. So kann beispielsweise vorgesehen sein, daß die beiden Teilelemente hohlzylinderförmig ausgebildet und jeweils von außen nach innen durchströmbar sind und daß das Dichtelement axial ungefähr in Höhe der Verbindung zwischen den beiden Teilelementen angeordnet ist. Dies ermöglicht es, das Kombinations-Filterelement in einem zylinderförmigen Filtertopf zu positionieren, der an seinem Mantel jeweils einem Teilelement zugeordnet zwei Durchgangsöffnungen trägt, die mit einem das Filterelement umgebenden Ringraum in Fluidverbindung stehen, wobei der Ringraum axial mittels des Dichtungselements in zwei fluiddicht getrennte Abschnitte unterteilt wird, so daß über die beiden Abschnitte den Teilelementen unterschiedliche Flüssigkeitsströme zugeführt werden können.

Alternativ kann vorgesehen sein, daß die beiden Teilelemente hohlzylinderförmig ausgebildet und radial von innen nach außen durchströmbar sind, wobei zwischen den beiden Teilelementen eine Trennwand positioniert ist und die beiden Teilelemente an ihren freien Enden jeweils stirnseitig anströmbar sind. Dies gibt die Möglichkeit, an den freien Enden der beiden Teilelemente jeweils einen Dichtungsring anzuordnen, so daß der die beiden Teilelemente umgebende Ringraum von den freien Enden der Teilelemente fluiddicht abtrennbar ist. Über den Ringraum kann die filtrierte Hydraulikflüssigkeit einem gemeinsamen Ablauf zugeführt werden, während den freien Enden der Teilelemente separate Zuläufe zugeordnet sind.

Zur Erzielung einer besonders kompakten Ausgestaltung ist bei einer bevorzugten Ausführungsform vorgesehen, daß das Filterelement ein Bypassventil zum Überbrücken des ersten Teilelements umfaßt. So kann beispielsweise vorgesehen sein, daß das Filterelement hohlzylinderförmig ausgebildet ist, wobei die beiden Teilelemente axial hintereinander angeordnet sind und jeweils einen Abschnitt des Zylindermantels des Filterelements ausbilden und daß das Bypassventil an einer Stirnseite des Filterelements angeordnet ist. Alternativ kann vorgesehen sein, daß das Bypassventil an einer Trennwand zwischen den beiden Teilelementen gehalten ist.

Der vorliegenden Erfindung liegt außerdem die Aufgabe zugrunde, eine hydraulische Schaltung bereitzustellen, die die Möglichkeit gibt, mittels der eingangs erläuterten Filtervorrichtung einen zuverlässigen Schutz mindestens einer Hydraulikpumpe und hochbelastbarer Hydraulikkomponenten zu gewährleisten.

Zur Lösung dieser Aufgabe wird erfindungsgemäß eine hydraulische Schaltung vorgeschlagen mit einem Vorrat an Hydraulikflüssigkeit, welche über mindestens eine Pumpe zumindest einem Hydraulikverbraucher zur Verfügung gestellt wird und vom Verbraucher über mindestens eine Rücklaufleitung zum Hydraulikvorrat zurückführbar ist, sowie mit einer Filtervorrichtung der eingangs genannten Art, wobei ein Zulauf der Filtervorrichtung mit dem Hydraulikvorrat, der andere Zulauf über eine Rücklaufleitung mit zumindest einem Verbraucher und der Ablauf der Filtervorrichtung mit der Pumpe verbunden ist. Mit dieser hydraulischen Schaltung kann die Pumpe zuverlässig geschützt werden. Hierzu wird der dem zweiten, gröberen Teilelement der Filtervorrichtung zugeordnete Zulauf mit dem Hydraulikvorrat verbunden und die Hydraulikpumpe an den gemeinsamen Ablauf der Filtervorrichtung angeschlossen. Die Hydraulikflüssigkeit, die der Pumpe vom Hydraulikvorrat zugeführt wird, wird somit über das zweite Teilelement gefiltert. Hierbei erfolgt am zweiten Teilelement aufgrund seiner relativ geringen Feinheit nur ein verhältnismäßig kleiner Druckabfall, so daß die Hydraulikpumpe nur wenig belastet wird. Um auch sehr kleine Schmutzpartikel wirkungsvoll aus der Hydraulikflüssigkeit auszufiltern, wird in eine vom Hydraulikverbraucher ausgehende Rücklaufleitung das erste Teilelement geschaltet. Hierzu wird die Rücklaufleitung an den dem zweiten Teilelement zugeordneten Zulauf der Filtervorrichtung angeschlossen, so daß die vom Verbraucher abströmende Hydraulikflüssigkeit über das erste Teilelement zum gemeinsamen Ablauf der Filtervorrichtung strömt und hierbei wirkungsvoll gefiltert wird. Der Hydraulikpumpe kann somit über die Filtervorrichtung gleichzeitig grob gefilterte Hydraulikflüssigkeit aus dem Hydraulikvorrat und feingefilterte Hydraulikflüssigkeit vom Verbraucher zugeführt werden. Das feinere, erste Teilelement wird ausschließlich von Hydraulikflüssigkeit durchströmt, die aus dem Systemrücklauf stammt und der Hydraulikpumpe zugeführt wird. Das grobere, zweite Teilelement wird dagegen nur von der Differenzmenge zwischen dem Pumpenförderstrom und dem Rücklaufstrom durchflossen.

Günstig ist es, wenn dem ersten Teilelement ein Bypass- oder Druckbegrenzungsventil zugeordnet ist, durch das der Druckabfall am ersten Teilelement begrenzt werden kann.

Es kann vorgesehen sein, daß nur ein Teilstrom der von der zumindest einen Pumpe geförderten Hydraulikflüssigkeit zu dem dem ersten Teilelement zugeordneten Zulauf der Filtervorrichtung geleitet wird, während die restliche Hydraulikflüssigkeit dem Hydraulikvorrat zugeführt wird. So kann beispielsweise vorgesehen sein, daß mindestens zwei Hydraulikpumpen zum Einsatz kommen, denen jeweils ein Hydraulikverbraucher, beispielsweise eine hydraulische Lenkung bzw. eine Arbeitshydraulik nachgeordnet sind, wobei lediglich die Arbeitshydraulik mit dem Zulauf des ersten Teilelements verbunden ist, während die hydraulische Lenkung an den Hydraulikvorrat angeschlossen ist.

Alternativ kann vorgesehen sein, daß sämtliche von der zumindest einen Pumpe geförderten Hydraulikflüssigkeit dem dem ersten Teilelement zugeordneten Zulauf der Filtervorrichtung zugeführt wird.

Die nachstehende Beschreibung bevorzugter Ausführungsformen der Erfindung dient im Zusammenhang mit der Zeichnung der näheren Erläuterung. Es zeigen:
- Figur 1:: eine Schnittansicht einer ersten Ausführungsform einer erfindungsgemäßen Filtervorrichtung;
- Figur 2:: ein Blockschema einer hydraulischen Schaltung mit einer Filtervorrichtung gemäß der ersten Ausführungsform;
- Figur 3:: eine Teilschnittansicht einer zweiten Ausführungsform einer erfindungsgemäßen Filtervorrichtung;
- Figur 4:: ein Blockschema einer hydraulischen Schaltung mit einer Filtervorrichtung gemäß der zweiten Ausführungsform;
- Figur 5:: eine Teilschnittansicht einer dritten Ausführungsform einer erfindungsgemäßen Filtervorrichtung und
- Figur 6:: ein Blockschema einer hydraulischen Schaltung mit einer Filtervorrichtung gemäß der dritten Ausführungsform.

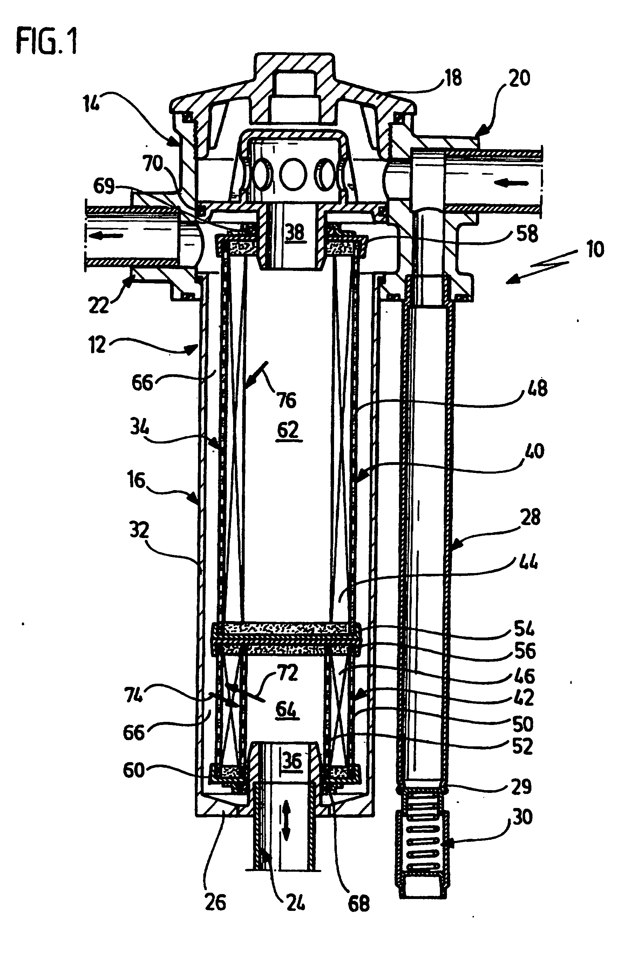

In Figur 1 ist schematisch in einer Schnittansicht eine erste Ausführungsform einer Filtervorrichtung dargestellt, die insgesamt mit dem Bezugszeichen 10 belegt ist. Diese umfaßt ein Filtergehäuse 12 mit einem im wesentlichen zylinderförmigen Filterkopf 14, an den sich in axialer Richtung ein ebenfalls zylinderförmig ausgebildeter Filtertopf 16 anschließt und der auf seiner dem Filtertopf 16 abgewandten, oberen Stirnseite mittels eines Deckels 18 fluiddicht verschließbar ist. Der Filterkopf 14 trägt in seiner Seitenwandung einen ersten Zulauf 20 zum Zuführen von zu filternder Hydraulikflüssigkeit sowie einen Ablauf 22 zum Abführen gefilterter Hydraulikflüssigkeit. Ein zweiter Zulauf 24 ist in einer Bodenwand 26 des Filtertopfes 16 vorgesehen. Vom ersten Zulauf 20 zweigt eine parallel zur Längsachse des Filtertopfs 16 ausgerichtete Bypassleitung 28 ab, an deren freiem Ende 29 ein Bypassventil 30 in Form eines federbelasteten Rückschlagventils 30 angeordnet ist.

Innerhalb des Filtertopfs 16 und im Abstand zu dessen Seitenwandung 32 ist ein Kombinations-Filterelement 34 angeordnet, das sich ausgehend von einem innenseitig von der Bodenwand 26 des Filtertopfs 16 abstehenden Zulaufstutzen 36 bis in Höhe eines innerhalb des Filterkopfs 14 positionierten Einlaufstutzens 38 erstreckt. Der Zulaufstutzen 36 steht hierbei mit dem zweiten Zulauf 24 in Strömungsverbindung, während der Einlaufstutzen 38 mit dem ersten Zulauf 20 in Strömungsverbindung steht.

Das Kombinations-Filterelement 34 weist eine zylinderförmige Ausgestaltung auf und umfaßt ein erstes Teilelement 40, das sich an den Einlaufstutzen 38 anschließt, sowie ein zweites Teilelement 42, das sich in axialer Richtung unmittelbar an das erste Teilelement 40 anschließt und mit dem Zulaufstutzen 36 in Strömungsverbindung steht. Die beiden Teilelemente 40 und 42 weisen jeweils ein Filtermaterial 44 bzw. 46 auf, das einen Zylindermantel ausbildet und auf seiner Außenseite von einem Durchgangsbohrungen aufweisenden Stützrohr 48 bzw. 50 abgestützt ist. Für das zweite Teilelement 42 ist zusätzlich auf der Innenseite des Filtermaterials 46 ein weiteres Durchgangsbohrungen aufweisendes Stützrohr 52 vorgesehen. Stirnseitig tragen die beiden Teilelemente 40 und 42 an dem einander zugewandten Ende jeweils eine Endkappe 54 bzw. 56, und an den freien Stirnseiten ist jeweils eine Abschlußscheibe 58 bzw. 60 angeordnet mit einer Durchgangsbohrung, die vom Einlaufstutzen 38 bzw. dem Zulaufstutzen 36 durchgriffen wird. Der vom Filtermaterial 44 umgebene Innenraum 62 des ersten Teilelements 40 steht somit über den Einlaufstutzen 38 mit dem ersten Zulauf 20 in Strömungsverbindung, während der vom Filtermaterial 46 umgebene Innenraum 64 des zweiten Teilelements 42 über den Zulaufstutzen 36 mit dem zweiten Zulauf 24 in Strömungsverbindung steht. Das Stützrohr 48 des ersten Teilelements sowie das äußere Stützrohr 50 des zweiten Teilelements sind unter Ausbildung eines gemeinsamen Ringraums 66 im Abstand zur Seitenwandung des Filtertopfs 16 angeordnet, wobei der Ringraum 66 mittels eines an der Abschlußscheibe 60 des zweiten Teilelements 42 angeordneten O-Rings 68, eines an der Abschlußscheibe 58 des ersten Teilelements 40 angeordneten O-Rings 69 und eines den Einlaufstutzen 38 umgebenden O-Rings 70 fluiddicht von dem ersten und dem zweiten Zulauf 20 bzw. 24 getrennt ist. Der Ringraum 66 steht mit dem Ablauf 22 in Strömungsverbindung. Dies hat zur Folge, daß sowohl die über den ersten Zulauf 20 dem ersten Teilelement zugeleitete Hydraulikflüssigkeit als auch die über den zweiten Zulauf 24 dem zweiten Teilelement 42 zugeführte Hydraulikflüssigkeit über den Ringraum 66 und den Ablauf 22 abgeführt werden können.

Da das zweite Teilelement 42 sowohl auf seiner Außenseite als auch auf seiner Innenseite jeweils ein Stützrohr 50 bzw. 52 trägt, kann es radial in beiden Richtungen durchströmt werden, also sowohl von innen nach außen, wie dies durch den Pfeil 72 angedeutet ist, als auch von außen nach innen, wie dies durch den Pfeil 74 symbolisiert ist. Im Gegensatz hierzu kann das erste Teilelement 40 nur von innen nach außen entsprechend dem Pfeil 76 durchströmt werden.

Als Filtermaterial 44 kann für das erste Teilelement 40 beispielsweise ein Faservlies zum Einsatz kommen mit einer hohen Feinheit, so daß selbst Schmutzpartikel in der Größe von ca. 5 µm noch mit einem Wirkungsgrad von mindestens 50 % ausgefiltert werden können.

Im Gegensatz zum ersten Teilelement 40 ist das zweite Teilelement 42 gröber ausgestaltet, es kann beispielsweise als Siebelement ausgebildet sein mit einer Feinheit von mindestens etwa 60 µm.

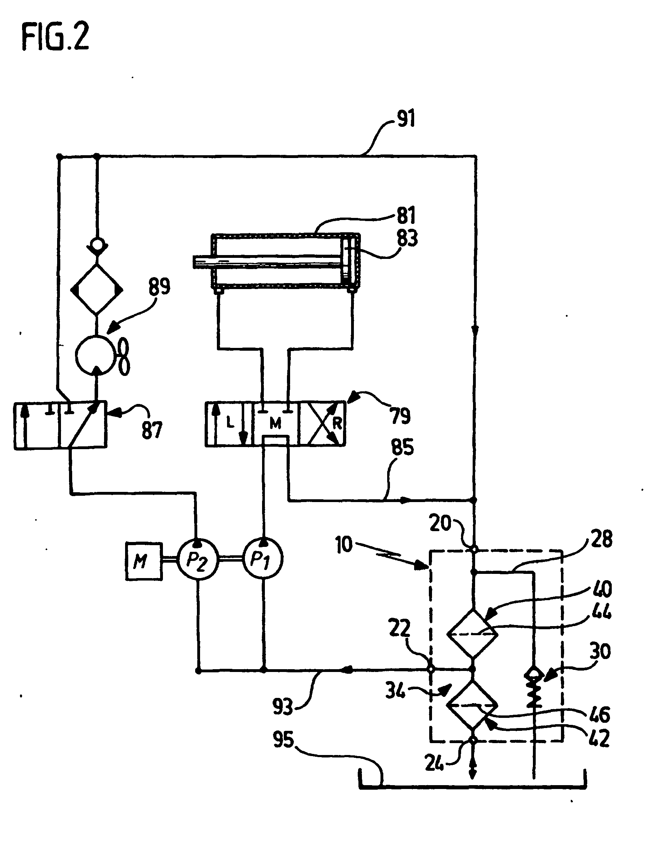

Ein Beispiel einer hydraulischen Schaltung, bei der die Filtervorrichtung 10 zum Einsatz kommen kann, ist in Figur 2 dargestellt. Hierbei sind an den gemeinsamen Ablauf 22 zwei von einem Motor M angetriebene Hydraulikpumpen P1 und P2 angeschlossen. Die Pumpe P1 steht über ein Dreiwege-Ventil 79 mit einem doppelt wirkenden Hydraulikzylinder 81 in Strömungsverbindung, in dem ein Kolben 83 verschiebbar gelagert ist. Vom Hydraulikzylinder 81 führt eine Leitung zurück zum Dreiwege-Ventil 79 und von diesem über eine Rücklaufleitung 85 zum ersten Zulauf 20 der Filtervorrichtung 10.

Der Hydraulikpumpe P2 ist ein Zweiwege-Ventil 87 nachgeordnet, über das Hydraulikflüssigkeit einem Verbraucher 89 zugeführt werden kann. Von diesem führt eine Rückführleitung 91 ebenfalls zum ersten Zulauf 20 der Filtervorrichtung 10.

Der zweite Zulauf 24 der Filtervorrichtung 10 steht über eine Zuführleitung 93 mit einem Hydraulikvorrat 95 in Strömungsverbindung. Letzterer ist außerdem über die Bypassleitung 28 und das Bypassventil 30 mit dem ersten Zulauf 20 verbunden.

Sämtliche von den beiden Pumpen P1 und P2 geförderte Hydraulikflüssigkeit wird bei der in Figur 2 skizzierten hydraulischen Schaltung über den ersten Zulauf 20 dem ersten Teilelement.40 zugeführt und von diesem gefiltert. Je nach Stärke des den Pumpen P1 und P2 zugeführten Pumpenförderstroms und des über die Rücklaufleitung 85 und die Rückführleitung 91 vom Hydrauliksystem zurückgeführten Rücklaufstroms wird entweder Hydraulikflüssigkeit aus dem Vorrat 95 über das zweite Teilelement 42 angesaugt oder aber überschüssige Hydraulikflüssigkeit wird über das zweite Teilelement 46 an den Hydraulikvorrat 95 abgegeben. Zu diesem Zweck kann das zweite Teilelement 46 in beiden Richtungen durchflossen werden, wobei eine Änderung der DurchfluBrichtung einen wirkungsvollen Rückspüleffekt zur Folge hat, durch den die Filterstandzeit wesentlich vergrößert werden kann.

Soll das Kombinations-Filterelement 40 ausgetauscht werden, so ist es hierzu lediglich erforderlich, den Deckel 18 der Filtervorrichtung 10 zu lösen, um anschließend den Einlaufstutzen 38 und das Kombinations-Filterelement 34 dem Filtergehäuse 12 zu entnehmen. Ein Zugang zum Filtergehäuse 12 im Bereich des Filtertopfs 16 ist somit für den Austausch des Kombinations-Filterelements 34 nicht erforderlich. Die Filtervorrichtung 10 ist deshalb besonders wartungsfreundlich.

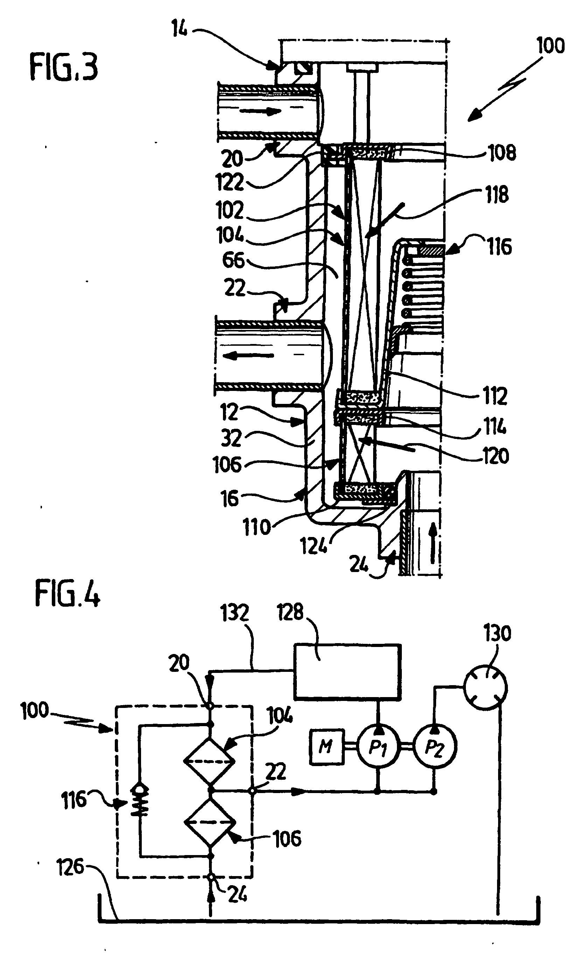

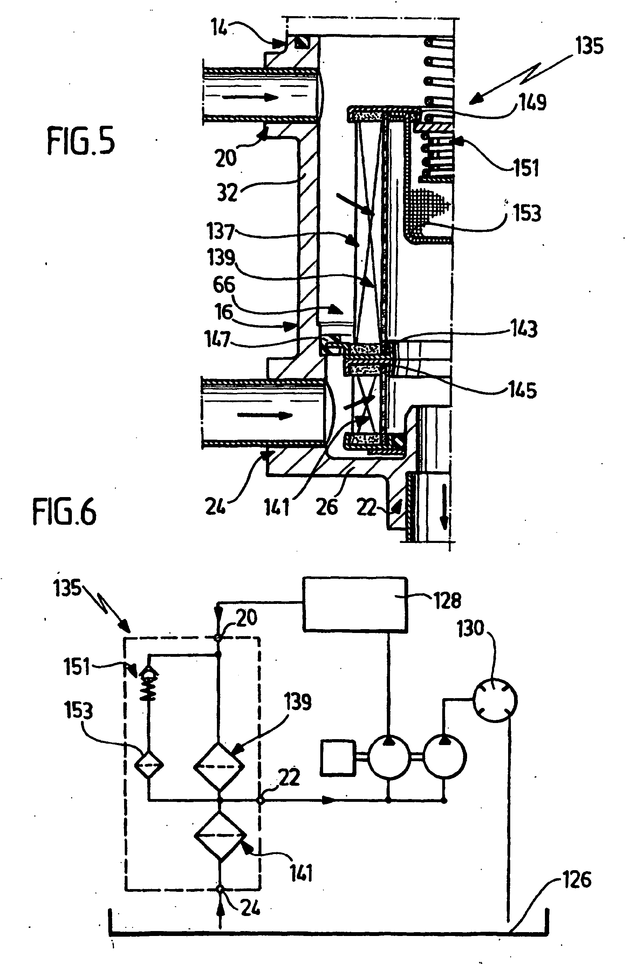

Alternative Ausgestaltungen der erfindungsgemäßen Filtervorrichtung sind in den Figuren 3 und 5 dargestellt. Diese sind ähnlich aufgebaut wie die voranstehend unter Bezugnahme auf Figur 1 erläuterte Filtervorrichtung 10. Für identische oder funktionell gleichwirkende Bauteile wurden deshalb dieselben Bezugszeichen verwendet wie in Figur 1. Bei der in Figur 3 dargestellten Filtervorrichtung 100 kommt ebenfalls ein im wesentlichen zylinderförmig ausgebildetes Filtergehäuse 12 mit einem Filterkopf 14 und einem Filtertopf 16 zum Einsatz, wobei der erste Zulauf 20 am Filterkopf 14 und der zweite Zulauf 24 an der Bodenwand des Filtertopfs 16 angeordnet ist. Der gemeinsame Ablauf 22 ist im Bereich der Seitenwandung 32 des Filtertopfs 16 angeordnet. Ein Kombinations-Filterelement 102 mit einem ersten Teilelement 104 und einem zweiten Teilelement 106 ist innerhalb des Filtertopfs 16 positioniert, wobei das erste Teilelement 102 eine höhere Feinheit aufweist als das zweite Teilelement 106. Beide Teilelemente 104 und 106 sind hohlzylinderförmig ausgebildet und tragen an ihren freien Stirnseiten jeweils eine Abschlußscheibe 108 bzw. 110 mit einer zentralen Durchgangsöffnung, und an den einander zugewandten Stirnseiten ist an den beiden Teilelementen 104 und 106 jeweils eine Endkappe 112 bzw. 114 angeordnet. Im Gegensatz zu dem in Figur 1 dargestellten Ausführungsbeispiel bilden die beiden Endkappen 112, 114 jedoch keine fluiddichte Trennwand zwischen den Innenräumen der beiden Teilelemente 104 und 106, sondern sie weisen jeweils eine Durchgangsöffnung auf, wobei an der Endkappe 112 des ersten Teilelements 104 ein Bypassventil 116 angeordnet ist. Das Bypassventil 116 ist somit am Kombinations-Filterelement 102 gehalten und kann zusammen mit diesem dem Filtergehäuse 12 entnommen werden. Ein separates Bypassventil, wie es bei der Filtervorrichtung 10 zum Einsatz kommt, kann bei der Filtervorrichtung 100 entfallen.

Die Anströmung des ersten Filterelements 104 erfolgt über den ersten Zulauf 20 und die Abschlußscheibe 108, wobei das erste Teilelement von innen nach außen durchströmt wird, wie dies in Figur 3 durch den Pfeil 118 symbolisiert ist. Das zweite Teilelement 106 wird ebenfalls von innen nach außen durchströmt entsprechend dem Pfeil 120. Die Innenräume der beiden Teilelemente 104 und 106 stehen über das Bypassventil 116 in Strömungsverbindung, so daß bei einem unzulässigen Druckanstieg am ersten Teilelement 104 eine Strömungsverbindung zwischen der Anströmseite des ersten Teilelements 104 und der Anströmseite des zweiten Teilelements 106 freigegeben wird. Selbst wenn also das erste Teilelement 104 über das Bypassventil 116 überbrückt wird, erfolgt noch eine zumindest grobe Filterung der Hydraulikflüssigkeit mittels des zweiten Teilelements 106.

Zur fluiddichten Abdichtung des das Kombinations-Filterelement 102 umgebenden Ringraums 66, der mit dem Ablauf 22 in Strömungsverbindung steht, von den Zuläufen 20 und 24 ist an den Abschlußscheiben 108 und 110 jeweils eine Ringdichtung 122 bzw. 124 angeordnet.

Ein Beispiel einer erfindungsgemäßen hydraulischen Schaltung, in der die Filtervorrichtung 100 zum Einsatz kommen kann, ist in Figur 4 blockschaltartig dargestellt. Hierbei wird der Filtervorrichtung 100 aus einem Hydraulikvorrat 126 über den dem zweiten Teilelement 106 zugeordneten zweiten Zulauf 24 Hydraulikflüssigkeit zugeführt, und an den gemeinsamen Ablauf 22 sind zwei Hydraulikpumpen P1 und P2 angeschlossen, denen jeweils ein Verbraucher 128 bzw. 130 nachgeordnet ist. Letzterer kann beispielsweise in Form einer hydraulischen Lenkung ausgebildet sein.

Im Gegensatz zu der in Figur 2 skizzierten Schaltung ist bei der hydraulischen Schaltung gemäß Figur 4 vorgesehen, daß lediglich der vom Verbraucher 128 stammende Hydraulikflüssigkeitsstrom über eine Rückführleitung 132 zum ersten Zulauf 20 der Filtervorrichtung 100 geleitet wird, während der von der Pumpe P2 geförderte Hydraulikflüssigkeitsstrom vom Verbraucher 130 direkt in den Hydraulikvorrat 126 zurückgeführt wird.

Erfolgt auf der Anströmseite des ersten Teilelements 104 ein Druckanstieg über festgelegte Normalwerte hinaus, so wird vom Bypassventil 116 eine Strömungsverbindung zum Zulauf 24 des zweiten Teilelements 106 freigegeben, d.h. die vom Verbraucher 128 stammende Hydraulikflüssigkeit wird unmittelbar dem zweiten Teilelement 106 zugeführt, ohne daß sie mit der im Hydraulikvorrat 126 befindlichen Hydraulikflüssigkeit in Kontakt kommt.

Eine weitere alternative Ausgestaltung einer erfindungsgemäßen Filtervorrichtung ist in Figur 5 dargestellt. Diese ist insgesamt mit dem Bezugszeichen 135 belegt. Sie ist ähnlich ausgestaltet wie die unter Bezugnahme auf Figur 3 erläuterte Filtervorrichtung 100. Allerdings kommt hierbei ein Kombinations-Filterelement 137 zum Einsatz, dessen erstes und zweites Teilelement 139 bzw. 141 jeweils von außen nach innen durchströmt werden. Die an der Bodenwand 26 des Filtertopfs 16 angeordnete Durchgangsöffnung bildet hierbei den gemeinsamen Ablauf 22 der Filtervorrichtung 135, während der erste Zulauf 20 und der zweite Zulauf 24 am Filterkopf 24 bzw. an der Seitenwandung 32 des Filtertopfs 16 angeordnet sind.

Um sicherzustellen, daß die über den ersten Zulauf 20 zugeführte Hydraulikflüssigkeit ausschließlich vom feineren Teilelement 139 gefiltert wird, ist in Höhe der einander zugewandten Endkappen 143 bzw. 145 der beiden Teilelemente 139, 141 am Kombinations-Filterele-ment 137 ein Dichtungsring 147 gehalten, der den das Kombinations-Filterelement 137 umgebenden Ringraum 66 axial in zwei Bereiche unterteilt, die jeweils mit einem der beiden Zuläufe 20 bzw. 24 in Strömungsverbindung stehen.

An der eine zentrale Durchgangsöffnung aufweisenden Abschlußscheibe 149 des ersten Teilelements 139/* ist ein Bypassventil 151 angeordnet, dem in Durchströmungsrichtung ein Siebelement 153 nachgeordnet ist. Wird bei einem unzulässigen Druckanstieg das erste Teilelement 139 überbrückt, indem das Bypassventil 151 in seine geöffnete Stellung übergeht, so wird eine Strömungsverbindung zwischen dem ersten Zulauf 20 und dem gemeinsamen Ablauf 22 freigegeben, wobei dann allerdings mittels des Siebelements 153 sichergestellt wird, daß die dem ersten Zulauf 20 zugeführte Hydraulikflüssigkeit selbst bei überbrücktem ersten Teilelement mittels des Siebelements 153 von groben Schmutzpartikeln befreit wird.

Ein Beispiel einer hydraulischen Schaltung, bei der die Filtervorrichtung 135 zum Einsatz kommen kann, ist in Figur 6 dargestellt. Diese entspricht im wesentlichen der in Figur 4 skizzierten hydraulischen Schaltung, im Gegensatz zu dieser wird allerdings bei einem unzulässigen Druckanstieg an der Anströmseite des ersten Teilelements 139 über das Bypassventil 151 eine direkte Strömungsverbindung zum gemeinsamen Ablauf 22 bereitgestellt, wobei zusätzlich das Siebelement 153 zum Einsatz kommt, das eine Grobfilterung der vom Hydraulikverbraucher 128 stammenden Hydraulikflüssigkeit sicherstellt.

## Patentansprüche

1. Filtervorrichtung zum Filtrieren einer Hydraulikflüssigkeit mit einem Filtergehäuse, in dem ein Filterelement angeordnet ist, und das Filterelement (34; 102; 137) ein erstes und ein zweites Teilelement (40, 42; 104, 106; 139, 141) umfaßt, wobei das erste Teillement (40; 104; 139) eine höhere Filter-Feinheit aufweist als das zweite Teilelement (42; 106; 141) und beide Teilelemente (40, 42; 104, 106; 139, 141) durch eine gemeinsame Einführöffnung in das Filtergehäuse (12) einsetzbar sind, **dadurch gekennzeichnet, daß** jedem Teilelement (40, 42; 104, 106; 139, 141) über einen separaten Zulauf (20 bzw. 24) im Filtergehäuse (12) Hydraulikflüssigkeit zuführbar ist und von beiden Teilelementen (40, 42; 104, 106; 139, 141) über einen gemeinsamen Ablauf (22) im Filtergehäuse (12) gefilterte Hydraulikflüssigkeit abführbar ist.

2. Filtervorrichtung nach Anspruch 1, **dadurch gekennzeichnet, daß** die Zuläufe (20, 24) mittels zumindest eines Dichtungselements (68, 69, 70; 122, 124; 147) fluiddicht voneinander getrennt sind.

3. Filtervorrichtung nach Anspruch 1 oder 2, **dadurch gekennzeichnet, daß** dem ersten Teilelement (40; 104; 139) eine Umgehungsleitung (28) mit einem Bypassventil (30; 116; 151) zugeordnet ist.

4. Filtervorrichtung nach Anspruch 3, **dadurch gekennzeichnet, daß** die Umgehungsleitung den Zulauf (20) des ersten Teilelements (104) mit dem Zulauf (24) des zweiten Teilelements (106) verbindet.

5. Filtervorrichtung nach Anspruch 3, **dadurch gekennzeichnet, daß** die Umgehungsleitung den Zulauf (20) des ersten Teilelements (139) mit dem gemeinsamen Ablauf (22) des ersten und zweiten Teilelements (139, 141) verbindet.

6. Filtervorrichtung nach Anspruch 5, **dadurch gekennzeichnet, daß** in der Umgehungsleitung ein Siebelement (153) angeordnet ist.

7. Filtervorrichtung nach einem der voranstehenden Ansprüche, **dadurch gekennzeichnet, daß** das Filtergehäuse (12) einen lösbar verbindbaren Deckel (18) umfaßt zum Verschließen der Einführöffnung.

8. Filtervorrichtung nach Anspruch 7, **dadurch gekennzeichnet, daß** das Filtergehäuse (12) einen Filtertopf (16) zur Aufnahme des Filterelements (34; 102; 137) umfaßt mit einer Bodenwand (26), in der eine Zugangsöffnung angeordnet ist, wobei der Filtertopf (14) mittels des Deckels (18) fluiddicht verschließbar ist.

9. Filterelement mit einem ersten und einem zweiten Teilelement (40; 42), die axial hintereinander angeordnet sind und jeweils ein Filtermaterial (44; 46) aufweisen, das einen Zylindermantel ausbildet und von einem Durchgangsbohrungen aufweisenden Stützrohr (48; 50) abgestützt ist, wobei das erste Teilelement (40) eine höhere Filterfeinheit aufweist als das zweite Teilelement (42), **dadurch gekennzeichnet, dass** die beiden Teilelemente (40; 42) auf dem einander zugewandten Ende jeweils eine dichte Endkappe (54; 56) tragen und das zweite Teilelement in zwei Richtungen (72; 74) durchströmbar ist.

10. Filterelement nach Anspruch 9, **dadurch gekennzeichnet, daß** das erste Teilelement (40) eine Filter-Feinheit kleiner etwa 20 µm aufweist.

11. Filterelement nach Anspruch 9 oder 10, **dadurch gekennzeichnet, daß** das erste Teilelement (40) ein Filtermaterial (44) mit einem Faservlies aufweist.

12. Filterelement nach Anspruch 9, 10 oder 11, **dadurch gekennzeichnet, daß** das zweite Teilelement (42) eine Filter-Feinheit kleiner ungefähr 60 µm aufweist.

13. Filterelement nach einem der Ansprüche 9 bis 12, **dadurch gekennzeichnet, daß** das zweite Teilelement (42) als Siebelement ausgebildet ist.

14. Filterelement nach einem der Ansprüche 9 bis 13, **dadurch gekennzeichnet, daß** die beiden Teilelemente (40, 42) lösbar miteinander verbindbar sind.

15. Filterelement nach einem der Ansprüche 9 bis 13, **dadurch gekennzeichnet, daß** die beiden Teilelemente (40, 42) unlösbar miteinander verbindbar sind.

16. Hydraulische Schaltung mit einem Vorrat (95; 126) an Hydraulikflüssigkeit, welche über mindestens eine Pumpe (P1, P2) zumindest einem Hydraulikverbraucher (81, 89; 128, 130) zur Verfügung gestellt wird und vom Verbraucher über mindestens eine Rücklaufleitung (85, 89) zum Hydraulikvorrat zurückführbar ist, sowie mit einer Filtervorrichtung (10; 100; 135) nach einem der Ansprüche 1 bis 8, wobei ein Zulauf (24) mit dem Hydraulikvorrat (95; 126), der andere Zulauf (20) über eine Rücklaufleitung (85, 89) mit zumindest einem Verbraucher (81, 89; 128) und der Ablauf (22) mit der Pumpe (P1, P2.) verbunden ist.

17. Hydraulische Schaltung nach Anspruch 16, **dadurch gekennzeichnet, daß** nur ein Teilstrom der von der zumindest einen Pumpe (P1, P2) geförderten Hydraulikflüssigkeit zum Zulauf (20) der Filtervorrichtung (10; 100; 135) geleitet wird, während der restliche Teilstrom in den Hydraulikvorrat (126) geführt wird.

18. Hydraulische Schaltung nach Anspruch 16, **dadurch gekennzeichnet, daß** sämtliche von der zumindest einen Pumpe (P1, P2) geförderten Hydraulikflüssigkeit dem dem ersten Teilelement (40) zugeordneten Zulauf (20) der Filtervorrichtung (10) zugeführt wird.

## Claims

1. Filter device for filtering a hydraulic fluid, with a filter housing in which a filter element is disposed, the filter element (34; 102; 137) comprising a first and a second subelement (40, 42; 104, 106; 139, 141), the first subelement (40; 104; 139) having a higher filter fineness than the second subelement (42; 106; 141) and both subelements (40, 42; 104, 106; 139, 141) being insertable through a common insertion opening into the filter housing (12), **characterized in that** it is possible for hydraulic fluid to be fed to each subelement (40, 42; 104, 106; 139, 141) via a separate supply inflow (20 and 24, respectively) in the filter housing (12) and for filtered hydraulic fluid to be discharged from both subelements (40, 42; 104, 106; 139, 141) via a common outflow (22) in the filter housing (12).

2. Filter device as claimed in claim 1, **characterized in that** the supply inflows (20, 24) are separated fluid-tightly from each other by means of at least one sealing element (68, 69, 70; 122, 124; 147).

3. Filter device as claimed in claim 1 or 2, **characterized in that** the first subelement (40; 104; 139) has an associated bypass line (28) with a bypass valve (30; 116; 151).

4. Filter device as claimed in claim 3, **characterized in that** the bypass line connects the supply inflow (20) of the first subelement (104) to the supply inflow (24) of the second subelement (106).

5. Filter device as claimed in claim 3, **characterized in that** the bypass line connects the supply inflow (20) of the first subelement (139) to the common outflow (22) of the first and second subelements (139, 141).

6. Filter device as claimed in claim 5, **characterized in that** a screening element (153) is disposed in the bypass line.

7. Filter device as claimed in one of the preceding claims, **characterized in that** the filter housing (12) comprises a detachably connectable cover (18) for closing the insertion opening.

8. Filter device as claimed in claim 7, **characterized in that** the filter housing (12) comprises a filter casing (16) for receiving the filter element (34; 102; 137), with a bottom wall (26), in which an access opening is disposed, it being possible for the filter casing (14) to be closed fluid-tightly by means of the cover (18).

9. Filter element with a first and a second subelement (40; 42) disposed axially one behind the other and each having a filter material (44; 46) which forms a cylinder jacket and is supported by a supporting tube (48; 50) having through-openings, the first subelement (40) having a higher filter fineness than the second subelement (42), **characterized in that** the two subelements (40; 42) each carry a tight end cap (54; 56) at the mutually facing end, and the second subelement can be flowed through in two directions (72; 74).

10. Filter element as claimed in claim 9, **characterized in that** the first subelement (40) has a filter fineness of less than approximately 20 µm.

11. Filter element as claimed in claim 9 or 10, **characterized in that** the first subelement (40) has a filter material (44) with a nonwoven fabric.

12. Filter element as claimed in claim 9, 10 or 11, **characterized in that** the second subelement (42) has a filter fineness of less than approximately 60 µm.

13. Filter element as claimed in one of claims 9 to 12, **characterized in that** the second subelement (42) is formed as a screening element.

14. Filter element as claimed in one of claims 9 to 13, **characterized in that** the two subelements (40, 42) can be detachably connected to each other.

15. Filter element as claimed in one of claims 9 to 13, **characterized in that** the two subelements (40, 42) can be undetachably connected to each other.

16. Hydraulic circuit with a supply (95; 126) of hydraulic fluid which is made available to at least one hydraulic consumer (81, 89; 128, 130) by means of at least one pump (P1, P2), and can be fed back from the consumer to the hydraulic supply via at least one return line (85, 89), and also with a filter device (10; 100; 135) as claimed in one of claims 1 to 8, one supply inflow (24) being connected to the hydraulic supply (95; 126), the other supply inflow (20) being connected via a return line (85, 89) to at least one consumer (81, 89; 128), and the outflow (22) being connected to the pump (P1, P2).

17. Hydraulic circuit as claimed in claim 16, **characterized in that** only a partial flow of the hydraulic fluid delivered by the at least one pump (P1, P2) is passed to the supply inflow (20) of the filter device (10; 100; 135), while the remaining partial flow is fed into the hydraulic supply (126).

18. Hydraulic circuit as claimed in claim 16, **characterized in that** all the hydraulic fluid delivered by the at least one pump (P1, P2) is fed to the supply inflow (20) of the filter device (10) associated with the first subelement (40).

## Revendications

1. Dispositif pour la filtration d'un liquide hydraulique, comportant un carter de filtre dans lequel est disposé un élément filtrant, et l'élément filtrant (34 ; 102 ; 137) comprend un premier et un deuxième éléments partiels (40, 42 ; 104, 106 ; 139, 141), moyennant quoi le premier élément partiel (40 ; 104 ; 139) présente une finesse de filtration qui est supérieure à celle du deuxième élément partiel (42 ; 106 ; 141), et les deux éléments partiels (40, 42 ; 104, 106 ; 139, 141) peuvent être placés dans le carter de filtre (12) par une ouverture d'insertion commune, **caractérisé en ce que** le liquide hydraulique peut être amené à chaque élément partiel (40, 42 ; 104, 106 ; 139, 141) par une entrée séparée (20 resp. 24) prévue dans le carter de filtre (12), et le liquide hydraulique filtré (12) peut être évacué des deux éléments partiels (40, 42 ; 104, 106 ; 139, 141) par une sortie commune (22) prévue dans le carter de filtre (12).

2. Dispositif de filtration selon la revendication 1, **caractérisé en ce que** les entrées (20, 24) sont séparées l'une de l'autre de manière étanche aux fluides au moyen d'au moins un élément d'étanchéité (68, 69, 70 ; 122, 124 ; 147).

3. Dispositif de filtration selon la revendication 1 ou 2, **caractérisé en ce qu'**une conduite de dérivation (28) comportant un clapet de dérivation (30; 116; 151) est associée au premier élément partiel (40; 104; 139).

4. Dispositif de filtration selon la revendication 3, **caractérisé en ce que** la conduite de dérivation relie l'entrée (20) du premier élément partiel (104) à l'entrée (24) du deuxième élément partiel (106).

5. Dispositif de filtration selon la revendication 3, **caractérisé en ce que** la conduite de dérivation relie l'entrée (20) du premier élément partiel (139) à la sortie commune (22) du premier et du deuxième élément partiel (139, 141).

6. Dispositif de filtration selon la revendication 5, **caractérisé en ce qu'**un élément de criblage (153) est disposé dans la conduite de dérivation.

7. Dispositif de filtration selon l'une des revendications précédentes, **caractérisé en ce que** le carter de filtre (12) comprend un couvercle (18), assemblé de manière amovible, pour la fermeture de l'ouverture d'insertion.

8. Dispositif de filtration selon la revendication 7, **caractérisé en ce que** le carter de filtre (12) comprend, pour le logement de l'élément filtrant (34 ; 102 ; 137), un pot de filtre (16) comportant une paroi de fond dans laquelle est aménagée une ouverture d'accès, ledit pot de filtre (14) pouvant être fermé de manière étanche aux fluides au moyen du couvercle (18).

9. Elément filtrant comprenant un premier et un deuxième éléments partiels (40; 42) qui sont disposés l'un derrière l'autre dans le sens axial, et qui présentent chacun un matériau filtrant (44 ; 46) qui forme une chemise de cylindre et qui est soutenu par un tube de soutien (48 ; 50) présentant des trous traversants, le premier élément partiel (40) présentant une finesse de filtration qui est supérieure à celle du deuxième élément partiel (42), **caractérisé en ce que** les deux éléments partiels (40; 42) portent chacun à leur extrémité faisant face à celle de l'autre, un capuchon d'extrémité étanche (54 ; 56), et **en ce que** le deuxième élément partiel peut être parcouru par le flux dans deux sens (72 ; 74).

10. Elément filtrant selon la revendication 9, **caractérisé en ce que** le premier élément partiel (40) présente une finesse de filtration de moins d'environ 20 µm.

11. Elément filtrant selon la revendication 9 ou 10, **caractérisé en ce que** le premier élément partiel (40) présente un matériau filtrant (44) comportant un non-tissé.

12. Elément filtrant selon la revendication 9, 10 ou 11, **caractérisé en ce que** le deuxième élément partiel (42) présente une finesse de filtration de moins d'environ 60 µm.

13. Elément filtrant selon l'une des revendications 9 à 12, **caractérisé en ce que** le deuxième élément partiel (42) est réalisé sous la forme d'un élément de criblage.

14. Elément filtrant selon l'une des revendications 9 à 13, **caractérisé en ce que** les deux éléments partiels (40, 42) peuvent être reliés l'un à l'autre de manière amovible.

15. Elément filtrant selon l'une des revendications 9 à 13, **caractérisé en ce que** les deux éléments partiels (40, 42) peuvent être reliés l'un à l'autre de manière inamovible.

16. Circuit hydraulique comportant une réserve (95 ; 126) d'un liquide hydraulique, qui est fourni par au moins une pompe (P1, P2) à au moins un utilisateur hydraulique (81, 89 ; 128, 130) et qui peut être retourné par l'utilisateur à la réserve hydraulique par l'intermédiaire d'au moins une conduite de retour (85, 89), ainsi qu'un dispositif de filtration (10 ; 100 ; 135) selon l'une des revendications 1 à 8, moyennant quoi une entrée (24) est reliée à la réserve hydraulique (95 ; 126), l'autre entrée (20) est reliée à au moins un utilisateur (81, 89 ; 128) par l'intermédiaire d'une conduite de retour (85, 89), et la sortie (22) est reliée à la pompe (P1, P2).

17. Circuit hydraulique selon la revendication 16, **caractérisé en ce qu'**une partie seulement du flux de liquide hydraulique transporté par ladite au moins une pompe (P1, P2) est dirigée vers l'entrée (20) du dispositif de filtration (10 ; 100 ; 135), tandis que la partie restante du flux est amenée dans la réserve hydraulique (126).

18. Circuit hydraulique selon la revendication 16, **caractérisé en ce que** la totalité du liquide hydraulique transporté par ladite au moins une pompe (P1, P2) est amenée à l'entrée (20) du dispositif de filtration (10) associée au premier élément partiel (40).
